Europäisches Patentamt

European Patent Office

Office européen des brevets

(11) Publication number: **0 019 995**
**A1**

## (12) EUROPEAN PATENT APPLICATION

(21) Application number: 80301063.6

(22) Date of filing: 02.04.80

(51) Int. Cl.³: **F 27 B 7/28,** C 04 B 35/68,
C 04 B 35/04

(30) Priority: 23.04.79 US 32304

(71) Applicant: **KAISER ALUMINUM & CHEMICAL CORPORATION, 865 Kaiser Building 300 Lakeside Drive, Oakland California 94643 (US)**

(43) Date of publication of application: 10.12.80
**Bulletin 80/25**

(72) Inventor: **Geisler, Thomas Alan, 776 Via del Sol, Livermore California, 94550 (US)**

(84) Designated Contracting States: **BE DE FR GB IT LU NL SE**

(74) Representative: **Oliver, Roy Edward et al, POLLAK, MERCER & TENCH High Holborn House 52-54 High Holborn, London WC1V 6RY (GB)**

(54) Method of lining a rotary cement kiln and a refractory castable therefor.

(57) A rotary cement kiln is lined by placing a castable refractory against a clean kiln shell to which anchors have been attached, the refractory castable containing 1 to 10 % long chain glassy polyphosphate binder, up to 40 % chrome ore, the balance being periclase at least the —100 mesh (less than 0.15 mm) portion of which contains from 2 to 15 % CaO and has a lime/silica ratio of at least 2:1. A preferred refractory castable composition contains about 70 % MgO over all and uses a magnesite with a lime/silica ratio of 2.7 or greater.

EP 0 019 995 A1

ACTORUM AG

METHOD OF LINING A ROTARY CEMENT KILN

## Background of the Invention

This invention pertains to a method of lining a rotary cement kiln by preparing a clean surface on the metal shell, attaching anchors to the shell, and placing a refractory castable against the interior of the shell of the kiln.

It is known to line a rotary cement kiln with refractory castable (see US 3,836,612), but heretofore in practice such a method of lining has been confined to the cooler portions of the kiln, and the refractory materials used have been of the high alumina or aluminosilicate type, generally using cement as a binder. One problem with such cement-containing castables is that they require a relatively large amount of water to form the products of hydration which form the cement bond. When such castables are heated up in use, the water of hydration is driven off, and care must be taken to see that the refractory is not disrupted in the process.

Also, in the hot zones of rotary kilns for burning cement clinker, a preferred lining material is basic refractory, for example one of periclase or periclase-chrome. Brick for such use have been made with compositions similar to that used in the present invention. In the high temperature areas of the kiln it has heretofore not been possible to cast the lining because a suitable basic refractory castable was not available. One of the advantages of basic refractory kiln liners, and the reason that a basic castable refractory is desirable in the hot zone, is that such refractories have a chemical compatibility with the cement clinker which promotes the formation of a thick clinker coating on the lining, this coating protecting the lining from wear.

The present invention is directed to the solution of the problem of providing a basic refractory castable material suitable for lining the burning zone of a rotary cement kiln.

## Summary of the Invention

It has now been discovered, according to this invention, that a rotary cement kiln can be lined by (1) cleaning the interior portions of the kiln shell to be lined, (2) attaching anchors to that portion of kiln shell, and (3) placing refractory castable material in the area to be lined, the refractory castable consisting essentially of (a) from 1 to 10% of a long chain glassy polyphosphate binder and (b) up to 40% chrome ore, (c) the balance being periclase at least the -100 mesh portion of which contains from 2 to 15% CaO, an amount of $SiO_2$ such that the $CaO/SiO_2$ ratio is at least 2:1, and up to 20% other impurities, the balance being MgO, all percentages being by weight, the percent of the castable ingredients being based on the total dry weight of the refractory castable, and the percent of the components of the periclase being based on the weight of the periclase.

## Detailed Description

The first step in lining a cement kiln by the method of this invention is to clean the portion of the kiln shell to be lined. While such step may seem superfluous in the case of a new kiln, in most instances the present invention will be used to repair or replace the lining of an already existing kiln. In these cases, cleaning out of the old refractory down to the kiln shell is important.

To the so cleaned metal shell are attached anchors, preferably metal anchors such as are well-known in this industry, for example those shown in US 3,445,099. A preferred method of attachment, shown in that patent, is to tack weld the metal anchor to a nut which has been welded to the steel shell. Such method of attachment

permits the anchor to break loose from the nut after the lining has been placed and the kiln put in operation, thus accommodating stresses in the operating kiln. Such method of attachment is hereafter referred to as "frangible". The metal anchors can be of any material, for example steel, particularly stainless steel.

The bulk of the refractory castable will be refractory aggregate. Up to 40% by weight of this can be chrome ore, but the major portion of the aggregate, and perhaps all of it, will be periclase. The chrome ore, if used, will be a refractory grade of any such well-known materials, but the periclase, particularly that less than 0.15 mm (-100 mesh), in size must meet certain chemical restrictions. Specifically, it will contain from 2 to 15%, preferably from 9 to 13%, and most preferably about 11%, CaO. It will also contain an amount of silica such that the lime/silica ratio is at least 2, and preferably 2.7 or greater. While it is preferred that all the periclase used meet the preceding specifications, since the reaction between the binder and the periclase is primarily with the fine (i.e., less than 0.15 mm or -100 mesh) periclase, the benefits of this invention can be obtained with compositions which contain another periclase as the coarse (i.e., over 0.15 mm or +100 mesh) portion. The periclase need not be particularly pure, and may contain up to 20% of other impurities, for example $Al_2O_3$, $B_2O_3$, $Fe_2O_3$, and the like. The term "periclase" as used in the specification and claims is meant to include not only synthetic periclase grain but also dead burned natural magnesite and other refractory aggregates predominantly MgO.

In order to achieve the best clinker coating when the kiln is in operation, it is desirable that the chemical composition of the castable match that of brick which have heretofore been used to line such kilns. One particularly useful composition contains a mixture of chrome ore and periclase in such proportions that the overall MgO content of the aggregate is about 70%. The refractory aggregate will be sized so that all is, for example, less than 6.7 mm in size (i.e., passes a 3 mesh screen), and at least 25% of the aggregate will be periclase less than 0.15 mm in size (i.e., passing a 100 mesh screen). In general, the composition will be sized to achieve good packing and high placed density, as is known in this art.

The refractory aggregate will be bonded with from 1 to 10% by weight, based on the total weight of aggregate and binder, of a long chain glassy polyphosphate. These are known refractory bonding materials (see US 3,304,187 and US 3,392,037) which have the following type formula $Na_{n+2}P_nO_{3n+1}$ where n, the number of phosphorous atoms in the chain, varies from 4 to 100. A preferred material has an average chain length of about 20.

While it is not certain, and applicant does not wish to be bound to any theory, it is believed that the polyphosphate binder reacts in some way with the CaO, which is in the form of dicalcium silicate and/or tricalcium silicate, in the periclase, as well as with the MgO, to form a bond. In any case, it has been found that an adequately strong bond is not obtained with periclases containing lower than a 2:1 lime silica ratio. Another advantage of the polyphosphate binder is that it requires less water than a cement bond, since the only requirement is that there be enough water to dissolve the polyphosphate, and once the refractory castable has been placed in the kiln, the lining can be rapidly dried to remove this relatively small amount of water.

Generally, the dry ingredients of the refractory castable will be mixed by a refractories manufacturer, bagged, and shipped to the user. Just before use, water, for example from 3 to 10% by weight based on the total weight of dry castable, will be added to the castable and the two thoroughly admixed. The range of suitable water contents for any one composition will not be so wide, perhaps, for example, from 5.5 to 6.5%. For any specific composition, enough water must be added so that it can be cast under vibration, but so much water must not be added that the bond will begin to "float" out of the cast material as it is vibrated.

The wet castable will then be placed in the kiln by any of several well-known methods, for example the methods disclosed in US 3,445,099 and US 3,836,612. Preferably vibration will be applied to the castable as it is placed in order to achieve maximum density with the least amount of added water.

After the castable has achieved an initial set, for example after from 4 to 24 hours, the forms are removed and the castable is dried, for example by heating it at a temperature of at least 110°C for about 8 hours. The lined kiln is then ready for use in making cement clinker.

## Example

A refractory castable was made by admixing 76.5 parts by weight of a dead burned natural magnesite containing about 78% $MgO$, 11% $CaO$, 4% $SiO_2$, 1% $Al_2O_3$, 4% $Fe_2O_3$, and 2% $Cr_2O_3$, with 20 parts by weight Masinloc chrome ore containing about 18% $MgO$, 1% $CaO$, 5% $SiO_2$, 29% $Al_2O_3$, 32% $Cr_2O_3$ and 15% $Fe_2O_3$, and 3.5 parts by weight Glass H, the proprietary name of FMC Corporation for a long chain glassy polyphosphate having an average chain length of about 21. Both the magnesite and chrome ore were sized so that all were smaller than 4.7 mm (i.e., passed a 4 mesh screen); all the chrome ore was coarser than 0.3 mm (was retained on a 48 mesh screen), but over one-third of the periclase was smaller than 0.15 mm (passed a 100 mesh screen). The Glass H was used in granular form, having an average size of 0.7 mm.

The preceding ingredients were mixed dry in a Stedman mixer for 4 minutes and then placed in bags for shipment to the user.

About 16 tons of the mix so made was used to repair the lining in a 14' 3" diameter (4.3 m) cement kiln, the material forming two complete rings about the kiln, one about 40 inches (1 m) wide about 100 feet (30 m) and the other 24 inches (60 cm) wide about 110 feet (33 m) from the discharge end of the kiln. The castings were both about 9 inches (23 cm) thick, and located at the upper end (i.e., away from the discharge end of the kiln) of the burning zone. Prior to placing the refractory castable, the kiln shell was cleaned of the old refractory lining (made of brick in the case of the wider section and of castable in the case of the narrower) and stainless steel metal anchors were frangibly attached to the steel shell. The anchors were placed on about 9" (23 cm) centers. Six percent water was added to the castable, which was placed behind forms and subjected to vibration during placement.

The forms were pulled approximately 36 hours after the finish of casting, and the burners in the kiln turned on 60 hours after casting, clinker being made in the kiln about 84 hours after completion of casting. The cast liner took a good clinker coating, about 6 inches (15 cm) thick.

When this kiln was shut down 4 months after previously casting the narrower section with the same castable material the cast section was inspected and judged to be in extremely good condition after the 4 months operation. The cast section replaced brick which had lasted, on the average, for one month of service. (The first cast section was replaced because it had been placed between sections of worn brick and was less than 9" (23 cm) thick.

In the specification and claims, percentages and parts are by weight unless otherwise indicated. Mesh sizes referred to herein are Tyler standard screen sizes which are defined in Chemical Engineers' Handbook, John H. Perry, Editor-in-Chief, Third Edition, 1950, published by McGraw Hill Book Company, at page 963. For example, a 100 mesh screen opening corresponds to 147 microns. Analyses of mineral components are reported in the usual manner, expressed as simple oxides, e.g. CaO and $SiO_2$, although the components may actually be present in various combinations, e.g. as a calcium silicate.

0019995

CLAIMS:

1. Method of lining a rotary cement kiln comprising (1) cleaning the interior portions of the kiln shell to be lined, (2) attaching anchors to that portion of the kiln shell, and (3) placing refractory castable material in the area to be lined, the refractory castable consisting essentially of (a) from 1 to 10% of a long chain glassy polyphosphate binder and (b) up to 40% chrome ore, (c) the balance being periclase at least the -100 mesh portion of which contains from 2 to 15% CaO, an amount of $SiO_2$ such that the $CaO/SiO_2$ ratio is at least 2:1, and up to 20% other impurities, the balance being MgO, all percentages being by weight, the percent of the castable ingredients being based on the total dry weight of the refractory castable, and the percent of the components of the periclase being based on the weight of the periclase.

2. Method according to claim 1 wherein the refractory castable contains about 70% MgO over all.

3. Method according to claim 1 wherein the -100 mesh periclase contains an amount of $SiO_2$ such that the lime/silica ratio is at least 2.7:1.

4. Method according to claim 1 wherein vibration is used in placing the refractory castable.

5. Method according to claim 1 wherein the anchors are metal anchors frangibly attached to the kiln shell.

6. Method according to claim 1, 2, 3, 4, or 5 wherein the -100 mesh periclase contains from 9 to 13% CaO.

7. Method according to claim 6 wherein the -100 mesh periclase contains about 11% CaO.

8. A refractory castable for use in lining a rotary cement kiln consisting essentially of (a) from 1 to 10% of a long chain glassy polyphosphate binder and (b) up to 40% chrome ore, (c) the balance being periclase at least the -100 mesh portion of which contains from 2 to 15% CaO, an amount of $SiO_2$ such that the $CaO/SiO_2$ ratio is at least 2:1, and up to 20% other impurities, the balance being MgO, all percentages being by weight, the percent of the castable ingredients being based on the total dry weight of the refractory castable, and the percent of the components of the periclase being based on the weight of the periclase.

9. Refractory castable according to claim 8 wherein the $CaO/SiO_2$ ratio in the -100 mesh periclase is at least 2.7:1.

10. Refractory castable according to claim 11 containing about 70% MgO over all.

11. Refractory castable according to claim 8, 9, or 10 wherein the -100 mesh periclase contains from 9 to 13% CaO.

12. Refractory castable according to claim 11 wherein the -100 mesh periclase contains about 11% CaO.

EUROPEAN SEARCH REPORT

0019995

Application number

EP 80 30 1063.6

## DOCUMENTS CONSIDERED TO BE RELEVANT

| Category | Citation of document with indication, where appropriate, of relevant passages | Relevant to claim |
|---|---|---|
| D | US - A - 3 836 612 (L. L. MANN) * claims * | 1,4,5 |
| D | US - A - 3 304 187 (LIMES et al.) | 1-3, 8-10 |
| A | ZEMENT-KALK-GIPS, No. 10, 1973 Wiesbaden M. KEINARTH "Feuerfeste Massen in der Zementindustrie" pages 475 to 478 * page 475, right column, last line * | |
| A | DE - B2 - 2 255 516 (VEITSCHER MAGNE-SITWERKE) | |
| A | GB - A - 1 217 791 (DRESSER INDU-STRIES) | |
| A | AT- B - 305 867 (ÖSTERREICHISCH-AME-RIKANISCHE MAGNESIT AG) | |
| D | US - A - 3 392 037 (NEELY et al.) | |
| D | US - A - 3 445 099 (OLSEN et al.) | |
| A | US - A - 4 083 752 (BIELSKI et al.) | |

CLASSIFICATION OF THE APPLICATION (Int. Cl.)

F 27 B  7/28
C 04 B 35/68
C 04 B 35/04

TECHNICAL FIELDS SEARCHED (Int.Cl.)

C 04 B 35/00
F 27 B  7/00
F 27 D  1/00

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

X The present search report has been drawn up for all claims

| Place of search | Date of completion of the search | Examiner |
|---|---|---|
| Berlin | 03-07-1980 | HÖRNER |

EPO Form 1503.1  06.78